**Europäisches Patentamt**

(19) **European Patent Office**

**Office européen des brevets**

(11) Veröffentlichungsnummer: **0 029 211**
**B1**

# EUROPÄISCHE PATENTSCHRIFT

(45) Veröffentlichungstag der Patentschrift:
**21.12.83**

(21) Anmeldenummer: **80106980.8**

(22) Anmeldetag: **12.11.80**

(51) Int. Cl.³: **A 01 D 80/00**

(54) **Heuwerbungsmaschine mit höhenverstellbarem Nachlaufrad.**

(30) Priorität: **16.11.79 DE 2946404**

(43) Veröffentlichungstag der Anmeldung:
**27.05.81 Patentblatt 81/21**

(45) Bekanntmachung des Hinweises auf die Patenterteilung:
**21.12.83 Patentblatt 83/51**

(84) Benannte Vertragsstaaten:
**AT CH FR GB IT LI NL**

(56) Entgegenhaltungen:
**AT - B - 198 559**
**DE - A - 1 482 085**
**DE - A - 2 164 080**
**DE - A - 2 249 504**
**DE - B - 2 156 229**

(73) Patentinhaber: **Klöckner-Humboldt-Deutz AG
Zweigniederlassung Fahr, D-7702 Gottmadingen (DE)**

(72) Erfinder: **Wessel, Ulrich, Hilzingerstrasse 33,
D-7702 Gottmadingen (DE)**
Erfinder: **Krauss, Albert, Im Bildstöckle 5,
D-7702 Gottmadingen (DE)**

(74) Vertreter: **Patentanwälte Leinweber & Zimmermann,
Rosental 7/II Aufg., D-8000 München 2 (DE)**

Heuwerbungsmaschine mit höhenverstellbarem Nachlaufrad

Die Erfindung betrifft eine Heuwerbungsmaschine mit höhenverstellbarem Nachlaufrad, das am unteren Ende einer schrägen Schwinge drehbar gelagert ist, deren oberes Ende mittels eines aus einer Hülse und einem in dieser angeordneten Bolzen bestehenden Gelenks gegenüber dem Maschinenrahmen um eine vertikale Achse verdrehbar ist, wobei der eine Teil des Gelenks an der Schwinge und der andere Teil am Maschinenrahmen befestigt ist, und mit einer Einrichtung zur selbsttätigen Rückstellung der Schwinge des Nachlaufrades in die Geradeausfahrstellung, bestehend aus einer Zugfeder, die an je einem Punkt des Maschinenrahmens und der S .hwinge angreift, wobei die beiden Angriffspunkte der Zugfeder zur Achse des Gelenks derart exzentrisch sind, daß sie in der Geradeausfahrstellung des Nachlaufrades die geringste gegenseitige Entfernung aufweisen.

Heuwerbungsmaschinen benötigen eine fein einstellbare Höhenverstellung, um sie an die verschiedenen Boden- und Erntegutverhältnisse anpassen zu können.

Bei einer in der DE-B-2 156 229 beschriebenen gattungsgemäßen Heuwerbungsmaschine besteht das Gelenk aus einem an der Schwinge befestigten Schwenkzapfen und aus einem hülsenförmigen Schwenklager, das über einen Tragarm mit einer Stützachse fest verbunden ist, die in ihrer Arbeitshöhe gegenüber dem Rahmen der Maschine verstellbar ist. Die Zugfeder der Rückstelleinrichtung greift an einem an dem Schwenkzapfen befestigten Kurbelarm und an der Stützachse an. Über die Art der Höhenverstellung der Stützachse gegenüber dem Maschinenrahmen ist in dieser Druckschrift jedoch nichts Näheres ausgeführt.

Aus der DE-A-1 482 085 ist es zwar bekannt, die Höhenverstellung des Nachlaufrades einer Heuwerbungsmaschine mittels einer Gewindespindel vorzunehmen, ohne daß aber eine Einrichtung zur selbsttätigen Rückstellung des Nachlaufrades in die Geradeausfahrstellung beschrieben ist.

Wenn man diese bekannte Höhenverstellung auf die Heuwerbungsmaschine nach der DE-B-2 156 229 übertragen wollte, dann würde dies bedeuten, daß die Stützachse in einer am Maschinenrahmen befestigten vertikalen Buchse drehbar gelagert ist, in die von oben eine Gewindespindel eingeschraubt ist. Bei einer solchen Konstruktion muß die Stützachse demnach durch die Rechradachse nach oben geführt sein, um die Höheneinstellung des Laufrades vornehmen zu können. Dies erfordert aber einen beträchtlichen konstruktiven Mehraufwand.

Der Erfindung liegt die Aufgabe zugrunde, die gattungsgemäße Heuwerbungsmaschine dahingehend weiterzubilden, daß sich die Höhenverstellung des Laufrades mit einem geringen konstruktiven Aufwand bewerkstelligen läßt.

Erfindungsgemäß wird diese Aufgabe dadurch gelöst, daß das Gelenk aus einer am Maschinenrahmen befestigten Gewindespindel und aus einer an der Schwinge befestigten Spindelmutter besteht und daß das am Maschinenrahmen angreifende Ende der Zugfeder um eine vertikale, exzentrisch zur Gewindespindel angeordnete Achse frei drehbeweglich gelagert ist.

Zur Verstellung der Arbeitshöhe wird die Heuwerbungsmaschine mit der Dreipunktaufhängung am Schlepper angehoben, und das Nachlaufrad bzw. dessen Schwinge wird ein- oder mehrmals um 360° gegenüber der Gewindespindel verdreht. Durch jede Verdrehung wird die Maschinenhöhe um eine Ganghöhe der Steigung des Spindelgewindes verstellt. Bei jeder Umdrehung der Schwinge durchläuft die Zugfeder der Rückstelleinrichtung den maximalen Dehnungszustand. Da die Zugfeder infolge ihrer Eigenelastizität bestrebt ist, in den Zustand minimaler Dehnung zurückzukehren, wird die Schwinge bzw. das Nachlaufrad von der Zugfeder selbsttätig in die der Geradeausfahrt entsprechende Stellung zurückgedreht, unabhängig davon, in welcher Winkelstellung sich die Schwinge nach Beendigung des Einstellvorgangs befunden ist.

Ein Ausführungsbeispiel der Erfindung ist in der Zeichnung dargestellt und wird im folgenden näher erläutert. Es zeigt:

Fig. 1 eine Seitenansicht eines höhenverstellbaren Nachlaufrades, und

Fig. 2 eine Draufsicht auf das Nachlaufrad nach Fig. 1.

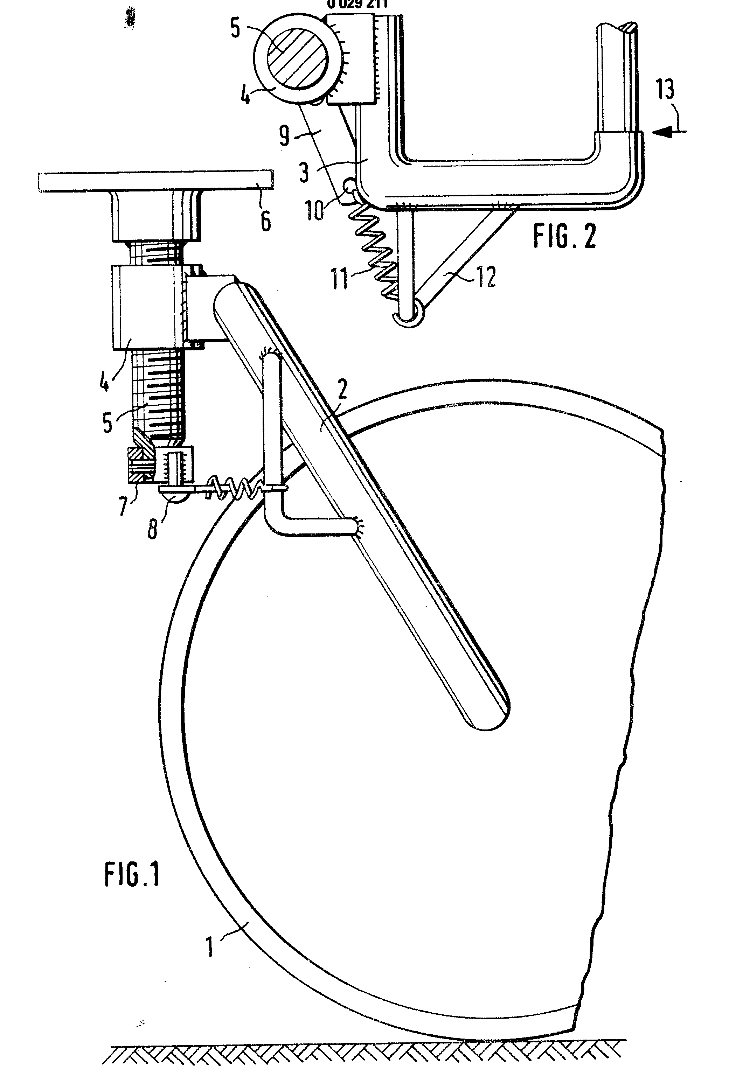

Fig. 1 zeigt ein Nachlaufrad 1, das am unteren Ende einer schrägen Schwinge 2 drehbar gelagert ist. An einem oberen, abgewinkelten Ende 3 der Schwinge 2 ist eine Spindelmutter 4 befestigt, die von einer Gewindespindel 5 durchsetzt wird. Die Gewindespindel 5 ist am Maschinengestell 6 einer (nicht dargestellten) Heuwerbungsmaschine befestigt. Mit dem unteren Ende der Gewindespindel 5 ist ein zylindrisches Teil 7 drehfest verbunden, an dem exzentrisch ein Haltebolzen 8 angebracht ist. Am Haltebolzen 8 ist eine Lasche 9 frei drehbeweglich gelagert. In eine Bohrung 10 der Lasche 9 ist eine Zugfeder 11 eingehängt, deren anderes Ende an einem Bügel 12 der Schwinge 2 angreift. Der Bolzen 8 ist an dem zylindrischen Teil 7 so angebracht, daß die Länge der Zugfeder 11 minimal ist, wenn sich das Laufrad in der durch den Pfeil 13 in Fig. 2 angegebenen Geradeausfahrstellung befindet.

Wenn das Nachlaufrad 1 mit der Schwinge 2 um die Längsachse der Gewindespindel 5 verschwenkt wird, so ändert sich die Höheneinstellung der Heuwerbungsmaschine entsprechend der Gewindesteigung der Gewindespindel 5. Nach Loslassen der Schwinge 2 kehrt diese und damit das Nachlaufrad 1 durch die Wirkung der gedehnten Zugfeder 11 selbsttätig in der Geradeausfahrt entsprechende Stellung zurück, in der die Dehnung der Zugfeder 11 minimal ist.

## Patentanspruch

1. Heuwerbungsmaschine mit höhenverstellbarem Nachlaufrad (1), das am unteren Ende einer schrägen Schwinge (2) drehbar gelagert ist, deren oberes Ende mittels eines aus einer Hülse und einem in dieser angeordneten Bolzen bestehenden Gelenks gegenüber dem Maschinenrahmen (6) um eine vertikale Achse verdrehbar ist, wobei der eine Teil des Gelenks an der Schwinge (2) und der andere Teil am Maschinenrahmen (6) befestigt ist, und mit einer Einrichtung zur selbsttätigen Rückstellung der Schwinge (2) des Nachlaufrades (1) in die Geradeausfahrstellung, bestehend aus einer Zugfeder (11), die an je einem Punkt des Maschinenrahmens (6) und der Schwinge (2) angreift, wobei die beiden Angriffspunkte der Zugfeder zur Achse des Gelenks derart exzentrisch sind, daß sie in der Geradeausfahrstellung des Nachlaufrades (1) die geringste gegenseitige Entfernung aufweisen, dadurch gekennzeichnet, daß das Gelenk aus einer am Maschinenrahmen befestigten Gewindespindel (5) und aus einer an der Schwinge (2) befestigten Spindelmutter (4) besteht und daß das am Maschinenrahmen (6) angreifende Ende (9) der Zugfeder (11) um eine vertikale, exzentrisch zur Gewindespindel (5) angeordnete Achse (8) frei drehbeweglich gelagert ist.

## Claim

A hay making machine comprising a trailing wheel (1) which is vertically adjustable and is rotatably supported at the lower end of an oblique rocker arm (2) the upper end of which is adapted to be rotated about a vertical axis relative to the machine frame (6) by means of a link made up of a sleeve with a bolt therein, one part of said link being secured to said rocker arm (2) while the other part is secured to said machine frame (6), and further comprising a means for automatically resetting said rocker arm (2) of said trailing wheel (1) into the straightahead travelling position, said means comprising a tension spring (11) being applied to one point each of said machine frame (6) and of said rocker arm (2), whereby the two points of application of said tension spring are in such a way eccentric relative to the axis of said link that their mutual distance is minimum when said trailing wheel (1) takes the straight-ahead travelling position, characterized in that link is made up of a threaded spindle (5) secured to said machine frame and of a spindle nut (4) secured to said rocker arm (2), and in that the end (9) of said tension spring (11) that is applied to said machine frame (6) is journaled for free rotation about a vertical axis (8) extending in eccentric relation to said threaded spindle (5).

## Revendication

Faneuse à roue traînée (1) déplaçable en hauteur, qui est montée de façon tournante à l'extrémité inférieure d'un bras pivotant oblique (2) dont l'extrémité supérieure est déplaçable en rotation par rapport au châssis de machine (6) autour d'un axe vertical au moyen d'une articulation composée d'un manchon et d'un tourillon disposé dans celui-ci, l'un des éléments de l'articulation étant fixé au bras pivotant (2) et l'autre élément étant fixé au châssis de machine (6), et avec un dispositif pour le retour automatique du bras pivotant (2) de la roue traînée (1) à la position de marche roulante en ligne droite, se composant d'un ressort de traction (11) accroché respectivement à un point du châssis de machine (6) et au bras pivotant (2), les deux points d'attache du ressort de traction étant excentrés de telle façon par rapport à l'axe de l'articulation qu'ils présentent la distance d'écartement réciproque la plus réduite dans la position de marche roulante en ligne droite de la roue traînée (1), caractérisée en ce que l'articulation se compose d'une tige filetée (5) fixée au châssis de machine et d'un écrou de tige filetée (4) fixé au bras pivotant (2) et en ce que l'extrémité (9) du ressort de traction (11), attachée au châssis de machine (6), est montée de façon librement mobile en rotation autour d'un axe vertical disposé excentriquement par rapport à la tige filetée (5).

0 029 211

FIG. 2

FIG.1